# EUROPÄISCHE PATENTSCHRIFT

(11) **EP 2 914 882 B1**
(45) Veröffentlichungstag und Bekanntmachung des Hinweises auf die Patenterteilung: **21.09.2016**
(21) Anmeldenummer: 13745388.2
(22) Anmeldetag: 01.08.2013
(51) Int. Cl.: F16J 15/08

(54) **METALL-ELASTOMERDICHTUNG MIT INTEGRIERTER SCHMUTZ- UND MEDIENABDICHTUNG**
METAL-ELASTOMER SEAL WITH INTEGRATED DIRT AND MEDIA SEALING
JOINT D'ÉTANCHÉITÉ ÉLASTOMÈRE/MÉTAL À ÉTANCHÉITÉ INTÉGRÉE CONTRE LES IMPURETÉS ET LES FLUIDES

(30) Priorität: 30.10.2012 DE 102012219808
(43) Veröffentlichungstag der Anmeldung: 09.09.2015
(73) Patentinhaber: Federal-Mogul Sealing Systems Gmbh, 57562 Herdorf (DE)
(72) Erfinder: KLINNER, Manfred, 53844 Troisdorf (DE)
(74) Vertreter: Becker Kurig Straus
(86) Internationale Anmeldenummer: PCT/EP2013/066158
(87) Internationale Veröffentlichungsnummer: WO 2014/067680

(56) Entgegenhaltungen:
- EP-A1- 0 853 204
- EP-A1- 2 138 745
- FR-A1- 2 774 430
- US-A1- 2001 048 202

## Beschreibung

Die vorliegende Erfindung betrifft eine verbesserte metallische Flachdichtung mit Elastomerdichtelementen, die eine integrierte Schmutz- und Medienabdichtung aufweist, insbesondere eine Stahl-Elastomer-Zylinderkopfdichtung.

In solchen Flachdichtungen, wie beispielsweise Zylinderkopfdichtungen, sind verschiedene Dichtaufgaben zu erfüllen. Die Brennräume müssen gegen den Austritt von Brenngasen abgedichtet werden. Weiterhin müssen Durchgangslöcher für Fluide bzw. Medien wie Fühlmittel und Schmiermittel gegen die entsprechenden Fluide abgedichtet werden. Nicht zuletzt ist eine Abdichtung am Außenrand erforderlich, um das Eindringen von Schmutz, Spritz- bzw. Kondenswasser etc. zu verhindern.

Bisher werden dafür Dichtungen verwendet, bei denen Elastomerprofile umlaufend an Dickblecklagen außen angespritzt werden, um eine Schmutzabdichtung zu erzielen. Für Medien wie Kühl- und Schmiermittel im Innenbereich werden ebenfalls Elastomerprofile eingesetzt. Die Gasabdichtung der Brennräume erfolgt üblicherweise durch umlaufende Dichtsicken in der Blechlage.

Das Dokument EP2138745A1, zeigt eine Dichtung gemäß dem Oberbegriff des Anspruchs 1.

Bei diesen bekannten Dichtungen wird eine entsprechende Menge des Elastomermaterials für den Außenrand benötigt. Weiterhin werden entsprechende spezielle Spritzwerkzeuge benötigt. Die herkömmliche Dichtung ist daher material- bzw. kostenintensiv und ist auf teure Spezialwerkzeuge angewiesen.

Es ist daher die Aufgabe der vorliegenden Erfindung, eine verbesserte Dichtung bereitzustellen, die bei zumindest gleichwertiger Funktion kostengünstiger ist und einfacher herzustellen ist.

Gemäß einem ersten Aspekt der Erfindung wird eine Flachdichtung bereitgestellt, umfassend:
- eine Funktionslage mit mindestens einer Mediendurchgangsöffnung und mindestens einer Brennraumdurchgangsöffnung; und
- eine von der Funktionslage separate zweite Lage mit einer der/den Mediendurchgangsöffnung(en) der Funktionslage entsprechenden Mediendurchgangsöffnung(en) und einer der/den Brennraumdurchgangsöffnung(en) der Funktionslage entsprechenden Brennraumdurchgangsöffnung(en);
- wobei die Funktionslage mindestens eine Brennraum-Dichtsicke für jede Brennraumdurchgangsöffnung aufweist, die bevorzugt eine Vollsicke ist; und
- wobei die zweite Lage eine Außenrand-Dichtsicke und ein Elastomerdichtprofil für jede Mediendurchgangsöffnung aufweist.

Durch den erfindungsgemäßen zweilagigen Aufbau wird die Aufgabe gelöst. An eine separate zweite Blechlage werden die Elastomerprofile für die Medienabdichtung angespritzt, gleichzeitig wird durch eine Sicke eine Schmutzabdichtung am Außenrand integriert. Die Funktionslage übernimmt die Gasabdichtung der Brennräume, indem eine umlaufende Dichtsicke vorgesehen wird.

Bei der erfindungsgemäßen Dichtung erfolgt die Gasabdichtung nur über ein Blech, das kein Federstahlblech sein muss, und das relativ dick sein kann. Die Medienabdichtung erfolgt wiederum über angespritzte Elastomerkörper an einem Blech, das ein dünnes Federstahlblech sein kann, aber auch andere Stahl-Qualitäten sind möglich. Die Aussenrandabdichtung bzw. Schmutzabdichtung erfolgt über eine Sicke, bevorzugt eine Halbsicke. Es liegt somit eine Trennung der Funktionen zwischen Brennraum- bzw. Gasabdichtung durch die Funktionslage und Medien- und Außen-/Schmutzabdichtung durch die separate zweite bzw. Schutzlage vor.

Gemäß der Erfindung liegen die Funktionslage und die zweite Lage im Außenrandbereich übereinander.

Mit dieser Ausführungsform ist es beispielsweise möglich, die Außendichtsicke so vorzusehen, dass sie zumindest teilweise auf der Funktionslage aufliegt.

Alternativ ist es auch möglich, die Funktionslage und die zweite Lage im Außenrandbereich nicht übereinander liegend vorzusehen. Alternativ erstreckt sich dann die separate zweite
Lage weiter nach außen als die Funktionslage. Auch bei dieser Ausführungsform sind sowohl Halb- als auch Vollsicken als Außendichtsicke möglich, wobei bevorzugt die jeweilige Sicke in Richtung auf die Funktionslage ausgebildet ist. Es ist so möglich, die Funktionslage durch die Außendichtsicke im Einbauzustand vollständig von der Außenseite zu isolieren.

Gemäß einer Ausführungsform liegen die Funktionslage und die zweite Lage im Innenrandbereich der Brennraumöffnung(en) übereinander.

Gemäß einer Ausführungsform liegen die Funktionslage und die zweite Lage im Innenrandbereich der Mediendurchgangsöffnung(en) übereinander.

Gemäß einer Ausführungsform steht die zweite Lage im Bereich der Mediendurchgangsöffhung(en) radial nach innen über die Funktionslage vor.

Bei dieser Ausführungsform wird mehr Platz geschaffen, um die Medienabdichtelemente anzuordnen bzw. um diese breiter auszulegen. Breitere Elastomerdichtelemente können eine verbesserte Haltbarkeit bieten, auch können beispielsweise mehrere wellenartige Abdichtlippen ausgebildet werden. Weiterhin kann durch die Elastomerdichtelemente für Medien die Funktionslage in den Mediendurchgangsöffnungen vollständig vom jeweiligen Medium isoliert werden.

Gemäß einer Ausführungsform umschließt mindestens eines der Elastomerdichtprofile die Innenrandkante der zweiten Lage der zugehörigen Mediendurchgangsöffnung.

Auf diese Weise wird ein guter Zusammenhalt der Elastomerdichtflächen auf der Ober- bzw. Unterseite der zweiten Lage bewirkt, da das Elastomermaterial beide Flächen an der Innenrandkante verbindet. Weiter wird die Innenrandkante der betreffenden Medienöffnung dadurch gegenüber dem Medium isoliert. Es wird auch ermöglicht, dass auf eine Nachbearbeitung der Innenrandkanten verzichtet werden kann, sofern diese etwa durch Stanzvorgänge noch Grate etc. aufweisen.

Gemäß einer Ausführungsform ist die Funktionslage eine relativ dickere Lage und die zweite Lage eine relativ dünnere Lage.

Gemäß einer Ausführungsform weist die zweite Lage eine Sicke um mindestens eine Mediendurchgangsöffnung auf, die in Richtung der Funktionslage weist.

Durch die Verwendung einer entsprechenden Sicke wird ermöglicht, dass die Mittelebene der zweiten Lage im Bereich der Mediendurchgangsöffnungen etwa mit der Mittelebene der Funktionslage zusammenfällt. Dies ist entweder durch eine Halbsicke möglich, oder alternativ durch eine Vollsicke mit nicht symmetrischer Höhe der Sickenfüße.

Gemäß einer beispielhaften Ausführungsform weist die Funktionslage eine Dicke von 0,1-2 mm, mehr bevorzugt 0,5-1,5 mm, am meisten bevorzugt etwa 0,9-1,1 mm und/oder die zweite Lage eine Dicke von etwa 0,1-0,4 mm, bevorzugt 0,1-0,3 mm auf. In einer beispielhaften Ausführungsform beträgt die Dicke der Schutzlage zwischen 5% und 50%, mehr bevorzugt zwischen 10 und 30%, am meisten bevorzugt etwa 20% der Dicke der Funktionslage.

Gemäß einer Ausführungsform ist die Funktionslage eine verzinkte Stahllage oder eine Edelstahllage und/oder die zweite Lage eine Federstahllage. Für die zweite Lage sind auch andere Stahlqualitäten möglich, wobei Federstahl bevorzugt aber nicht zwingend nötig ist.

Gemäß einer Ausführungsform weist die Funktionslage mindestens zwei Brennraumsicken pro Brennraumöffnung auf.

Gemäß einer Ausführungsform ist mindestens eines der Elastomerdichtprofile der Funktionslage zuweisend oder von der Funktionslage weg weisend verdickt ausgeführt.

Gemäß einer Ausführungsform weist die Funktionslage mindestens eine Verbindungsdurchgangsöffnung und die zweite Lage mindestens eine Umfalzung auf, die um den Innenrand der Verbindungsdurchgangsöffnung umgefaltet ist.

Gemäß dieser Ausführungsform sind eine oder mehrere Verbindungsdurchgangsöffnungen in der Funktionslage vorgesehen. Die zweite Lage kann dann durch diese Verbindungsdurchgangsöffnung(en) hindurch verdrängt werden, um in der Art eines Niets um den Rand der Verbindungsdurchgangsöffnung(en) umgefalzt zu werden. Auf diese Weise kann eine einfache und sichere Verbindung zwischen der Funktionslage und der zweiten Lage erzielt werden.

Um diesen Vorgang zu erleichtern, kann in der zweiten Lage eine korrespondierende, aber im Durchmesser kleinere Öffnung vorgesehen werden, etwa als Bohrung. Alternativ kann die zweite Lage an dieser Stelle durch ein entsprechendes Werkzeug in einem gemeinsamen Vorgang durchstoßen und umgefalzt werden. In der Funktionslage kann für den umgefalzten Teil der zweiten Lage eine entsprechende Vertiefung vorgesehen werden, in der die Umfalzung vollständig aufgenommen wird, um die Funktionslage nicht lokal zu verdicken.

Natürlich sind alternativ oder zusätzlich auch herkömmliche Verbindungsarten wie Kleben, Löten, Schweißen, Nieten, Schrauben und dergleichen möglich, um die Lagen sicher zu verbinden.

Kurze Beschreibung der Zeichnung
- Fig. 1: zeigt einen Ausschnitt einer Ausführungsform einer erfindungsgemäßen Dichtung im Querschnitt;
- Fig. 2: zeigt einen Bereich der Ausführungsform von Fig. 1 in einer dreidimensionalen Schnittansicht;
- Fig. 3: zeigt einen Bereich einer alternativen Ausführungsform in einer dreidimensionalen Schnittansicht;
- Fig. 4: zeigt einen weiteren Bereich einer Ausführungsform in einer dreidimensionalen Schnittansicht; und
- Fig. 5: zeigt eine Ausführungsform einer erfindungsgemäßen Dichtung in einer Aufsicht.

### Detaillierte Beschreibung

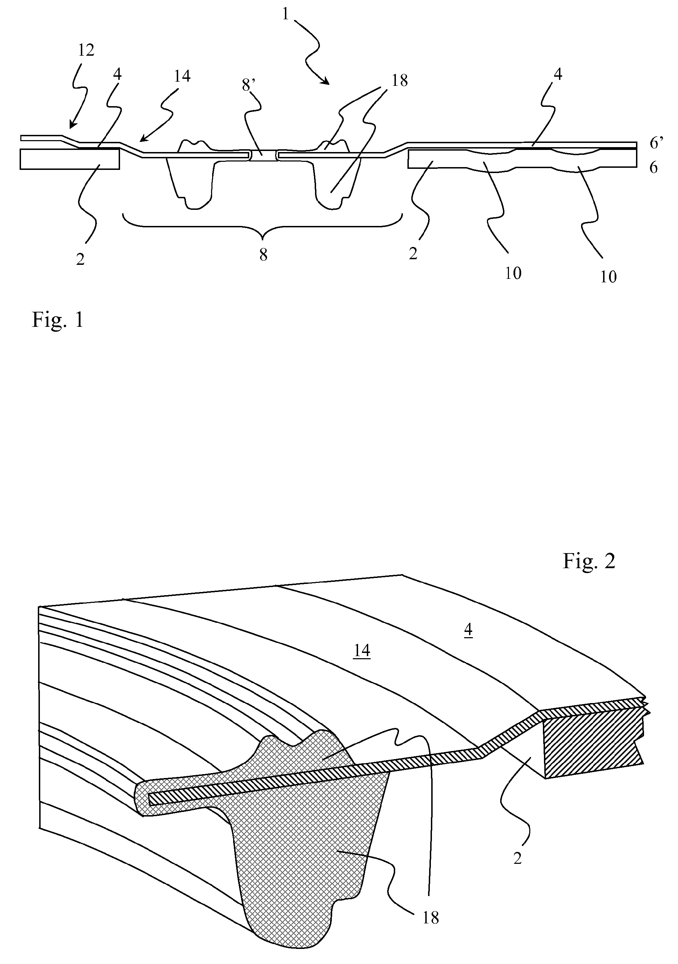

Figur 1 ist eine Querschnittsansicht eines Teils einer Ausführungsform einer erfindungsgemäßen Flachdichtung. Auf der in der Figur linken Seite befindet sich die Außenrandkante der Dichtung, während sich auf der rechten Seite einer Brennraumöffnung befindet. Im mittleren Bereich befindet sich eine Mediendurchgangsöffnung. Damit befindet sich im linken Bereich der Funktionsbereich "Schmutz- bzw. Außenabdichtung", im mittleren Bereich der Funktionsbereich "Medienabdichtung", sowie im rechten Bereich der Funktionsbereich "Gas- bzw. Brennraumabdichtung".

Die Dichtung 1 wird gebildet durch eine relativ dicke Funktionslage 2 sowie durch eine relativ dünne separate zweite Lage 4. Die Lage 4 wird erfindungsgemäß auch als Schutzlage bezeichnet. Die Funktionslage 2 weist mindestens eine Brennraumöffnung 6 (hier rechts) sowie mindestens eine Mediendurchgangsöffnung 8 auf. Die separate zweite Lage 4 weist dazu korrespondierende Brennraumöffnung(en) 6' und Mediendurchgangsöffnung(en) 8' auf. Natürlich kann die gesamte Dichtung auch mehrere Brennraumöffnungen 6, 6' und/oder mehrere Mediendurchgangsöffnungen 8, 8' aufweisen. Die jeweiligen Öffnungen in den verschiedenen Lagen sind nicht notwendigerweise gleich groß, wobei es bevorzugt ist, dass zumindest die Brennraumöffnungen im Wesentlichen fluchten.

Die Funktionslage 2 weist zur Abdichtung der Brenngase an der Brennraumöffnung mindestens eine Dichtsicke auf, in der hier gezeigten Ausführungsform handelt es sich dabei um zwei Vollsicken 10. Andere Anzahlen und Formen von Sicken, ebenso wie eine Kombination verschiedener Arten von Sicken (Halb- und Vollsicken) sind erfindungsgemäß ebenfalls möglich, etwa eine Vollsicke kombiniert mit einer Halbsicke. Zumindest eine der Sicken kann eine geschlossen umlaufende Sicke sein, um die Abdichtfunktion am Brennraum zu gewährleisten. Eine zweite oder auch allgemein weitere Sicke kann hingegen auch zumindest teilweise offen verlaufen. Zusätzliche Sicken können auch eine Stopperfunktion für die mindestens eine Dichtsicke erfüllen.

Alternativ zur geschlossenen Dichtsicke ist auch eine Variante mit sich überschneidenden Abschnitten möglich, etwa in der Form einer Labyrinth-Dichtung. Diese Variante muss nicht zwingend "geschlossen" sein.

Die separate zweite bzw. Schutzlage 4 weist eine Außenrand-Dichtsicke 12 auf, die in dem gezeigten Beispiel als Halbsicke ausgeführt ist. Alternativ kann stattdessen eine Vollsicke verwendet werden, und auch hier sind natürlich Kombinationen aus mindestens einer Außenrand-Dichtsicke und ggf. weiteren Sicken möglich, die nicht zwingend reine Dichtfunktion aufweisen. Auch diese zusätzlichen Sicken können optional als Stopper für die Außenrand-Dichtsicke fungieren.

In der gezeigten Variante der Dichtung 1 weisen die Funktionslage 2 und die Schutzlage 4 einen im Wesentlichen deckungsgleichen Außenrand auf. Alternativ ist es jedoch auch möglich, dass die Schutzlage 4 die Funktionslage 2 nach außen überragt. Dadurch wird es möglich, mit der Außenrand-Dichtsicke 12 die Funktionslage völlig von der Außenseite zu isolieren. Beispielsweise ist es denkbar, eine Außenrand-Dichtsicke vorzusehen, welche die Dicke der Funktionslage 2 zumindest ausgleicht, so dass im Einbauzustand die Funktionslage 2 gegenüber der Außenseite abgedichtet wird.

Die Schutzlage 4 weist angespritzte Elastomerdichtprofile 18 auf, welche die Abdichtung der Mediendurchgangsöffnung 8' (die beispielsweise für Kühl- oder Schmiermittel dient) übernehmen. In der Ausführungsform der Fig. 1 weist die Schutzlage 2 eine Mediendurchgangsöffnung 8' auf, die deutlich kleiner ist als die korrespondierende Mediendurchgangsöffnung 8 in der Funktionslage. Dadurch wird Raum geschaffen, um relativ breite Elastomerdichtprofile 18 vorsehen zu können. Da die Schutzlage 4 relativ dünn ist, kann der weiter nach innen ragende Anteil dadurch auch gut federn, um eventuelle Ungleichmäßigkeiten in der Höhe an den Mediendurchgangsöffnungen 8' auszugleichen.

Alternativ kann die Mediendurchgangsöffnung 8' auch nur relativ geringfügig kleiner oder sogar gleich groß wie die korrespondierende Mediendurchgangsöffnung 8 sein. Im letzteren Fall bieten sich dann Elastomerdichtprofile 18 an, deren Hauptteil bzw. deren Dichtungslippen nach innen vorstehen und wobei nur ein kleiner Teil zur Befestigung an dem Innenrand der Mediendurchgangsöffnung 8' angespritzt ist.

In der Ausführungsform von Fig. 1 weist die Schutzlage 4 weiter eine Stufe 14 auf, die sich innerhalb der Mediendurchgangsöffnung 8 der Funktionslage 2 befindet. Dadurch wird ermöglicht, die Mittelebenen von Funktionslage 2 und Schutzlage 4 gegeneinander auszurichten bzw. anzuordnen. In dem gezeigten Beispiel fluchten die Mittelebenen im Wesentlichen. Alternativ sind aber auch andere relative Anordnungen möglich, ebenso wie die Verwendung einer Vollsicke anstelle der Stufe bzw. Halbsicke 14.

Fig. 2 ist eine dreidimensionale Schnittansicht des Bereichs der Mediendurchgangsöffnung 8, 8' der Ausführungsform von Fig. 1. In der hier gezeigten Alternative sind die nach unten gerichteten bzw. der Funktionslage 2 zuweisenden Dichtflächen der Elastomerdichtprofile 18 deutlich dicker gestaltet als die gegenüberliegenden, von der Funktionslage 2 weg weisenden bzw. nach oben gerichteten Dichtflächen bzw. Dichtprofile. Die beiden Dichtflächen sind über eine einstückige Elastomerbrücke verbunden, die in dieser Ausführungsform geschlossen den Innenrand der Mediendurchgangsöffnung 8' umgibt. Bei dieser Ausführungsform kann ggf. auf eine Nachbearbeitung des Innenrandes der Mediendurchgangsöffnung 8' verzichtet werden, etwa wenn diese noch Grate oder dergleichen aufweist.

Die Stufe bzw. Halbsicke 14 ist hier ebenfalls dargestellt. Diese ist optional und muss nicht notwendigerweise bei allen Ausführungsformen der Erfindung vorhanden sein.

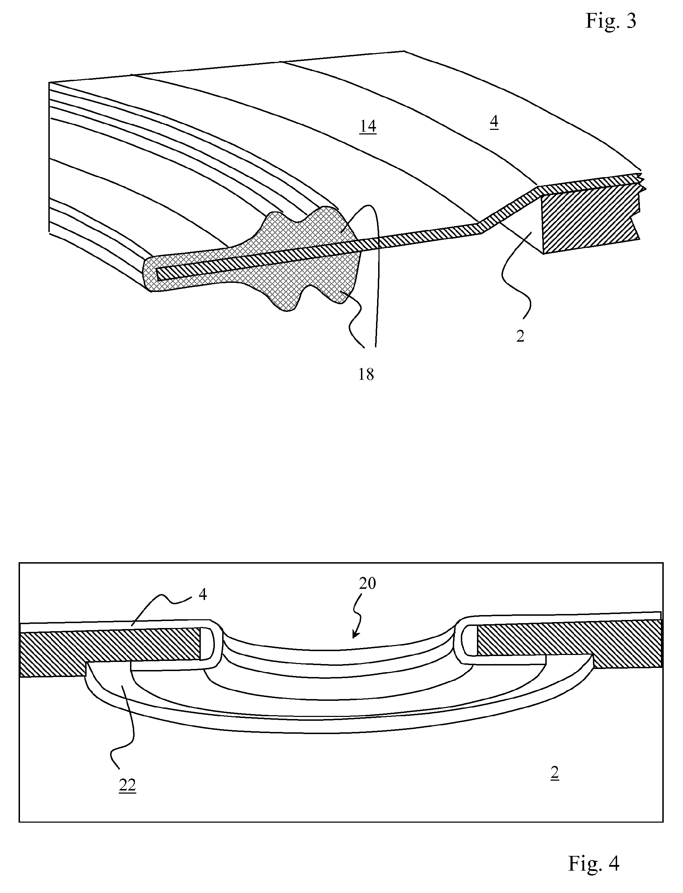

Fig. 3 zeigt eine bezüglich der Ausführungsform von Fig. 2 alternative Ausführung. Hier sind die Elastomerdichtprofile 18 symmetrisch, d.h. spiegelbildlich hinsichtlich der Schutzlage 2 ausgeführt. Auch hier sind beide Dichtflächen über eine einstückige Elastomerbrücke verbunden.

Alternativ ist es auch möglich, getrennte Dichtflächen bzw. Elastomerdichtprofile 18 auf jeder Oberfläche der Schutzlage 2 vorzusehen. Um dennoch eine gute Verbindung der Elastomerdichtprofile 18 zu erzielen, können diese etwa durch Bohrungen hindurch einstückig verbunden sein. Mit dieser Ausführungsform ist es möglich, das Anspritzen auf die beiden Außenflächen zu beschränken, was den Herstellungsprozess vereinfachen kann, insbesondere bei relativ kleinen Durchgangsöffnungen, bei denen ein Umspritzen des Innenrandes schwierig sein kann.

Fig. 4 zeigt einen Bereich einer Befestigungseinrichtung einer Ausführungsform der Erfindung in einer dreidimensionalen Schnittansicht. Neben nicht gezeigten bekannten Verbindungsverfahren wie Kleben, Löten, Schweißen, Nieten oder Schrauben kann diese Variante zum Einsatz kommen. Dabei ist in der Funktionslage 2 eine Verbindungsdurchgangsöffnung 20 vorgesehen. In dieser Verbindungsdurchgangsöffnung 20 wird die Schutzlage 4 um die Funktionslage 2 herumgefalzt. In der hier gezeigten Ausführungsform weist die Funktionslage 2 weiterhin eine Vertiefung 22 auf, in welcher der umgefalzte Teil der Schutzlage 4 aufgenommen ist, um die Dicke der Funktionslage 2 nicht zu verändern. Durch diese Art der Verbindung wird kein zusätzliches Material benötigt, auch sind keine zeit- und kostenintensiven Zusatzschritte wie Kleben, Löten, Schweißen, Nieten oder Verschrauben nötig.

In der Schutzlage 4 können bereits entsprechende, im Durchmesser kleinere Öffnungen vorgesehen sein, etwa in Form von kleinen Bohrungen. Mittels eines Werkzeugs kann dann in einem Schritt diese Öffnung vergrößert werden, wobei das dabei verdrängte Blech in einem zweiten Schritt (ggf. durch eine weiteres Werkzeug) um den Rand der Verbindungsdurchgangsöffnung 20 umgefalzt bzw. in die Vertiefung 22 hineingefalzt wird. Es ist aber auch möglich, in einem noch vorhergehenden Anfangsschritt die Bohrung in der Schutzlage 4 erst kurz vor dem Verbinden von Funktionslage 2 und Schutzlage 4 vorzusehen.

Die Verbindungsöffnungen 20 können optional so ausgelegt werden, dass gleichzeitig als Durchgangsöffnungen für Verbindungsschrauben von Zylinderkopf und Motorblock dienen. Alternativ können sie aber auch als davon unabhängige Öffnungen vorgesehen werden.

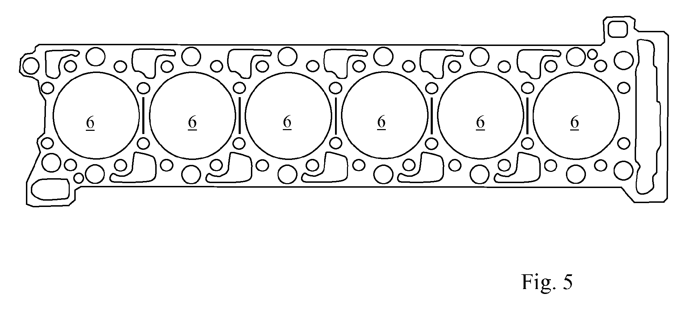

Fig. 5 zeigt eine erfindungsgemäße Dichtung (hier beispielhaft für einen Sechszylindermotor) in einer Aufsicht.

Die Erfindung bietet daher unter anderem die folgenden Vorteile:
- Die Integration von Funktionen in einer Lage, nämlich eine umlaufende Makroabdichtung gegen Schmutz etc. mit einer (beispielsweise Halb-) Sicke sowie eine Mikroabdichtung für Medien bzw. Fluide durch Elastomerprofile;
- Die Möglichkeit der Verwendung von nur einer bekannten, vorhandenen Federstahllage;
- Den Entfall der Nutzung von mindestens zwei Materialqualitäten für Einsatz/Einsätze und Träger im Vergleich zur Nutzung von Einzeleinsätzen bzw. Inserts;
- Ein verbessertes Handling, da nur eine Lage zum Anspritzen verwendet wird;
- Entfall von mehreren Einzelelementen im Falle der Nutzung von Einzeleinsätzen;
- Geringere Montagekosten, da kein Verbinden von vielen Einzelteilen an einer Trägerlage erforderlich ist; und
- Entfall der Notwendigkeit, eine Elastomerlösung für die Außenabdichtung zu verwenden, dadurch Kostenvorteile, da kein zusätzliches Elastomermaterial verwendet werden muss, sowie einfachere Spritzwerkzeuge eingesetzt werden können.

## Patentansprüche

1. Flachdichtung (1), umfassend:
- eine Funktionslage (2) mit mindestens einer Mediendurchgangsöffnung (6) und mindestens einer Brennraumdurchgangsöffnung (8); und
- eine von der Funktionslage separate zweite Lage (4) mit einer der/den Mediendurchgangsöffnung(en) (6) der Funktionslage (2) entsprechenden Mediendurchgangsöffnung(en) (6') und einer der/den Brennraumdurchgangsöffnung(en) (8) der Funktionslage (2) entsprechenden Brennraumdurchgangsöffnung(en) (8');
- wobei die Funktionslage (2) mindestens eine Brennraum-Dichtsicke (10) für jede Brennraumdurchgangsöffnung (8) aufweist, die bevorzugt eine Vollsicke ist; und
- wobei die zweite Lage (4) ein Elastomerdichtprofil (18) für jede Mediendurchgangsöffnung (6') aufweist;
**dadurch gekennzeichnet, dass**
- die zweite Lage (4) eine Außenrand-Dichtsicke (12) für jede Mediendurchgangsöffnung (6') aufweist; und
- die Funktionslage (2) und die zweite Lage (4) im Außenrandbereich übereinander liegen; oder
- sich die zweite Lage (4) weiter nach außen erstreckt als die Funktionslage (2).

2. Flachdichtung (1) nach Anspruch 1, wobei die Funktionslage (2) und die zweite Lage (4) im Innenrandbereich der Brennraumöffnung(en) (8, 8`) übereinander liegen.

3. Flachdichtung (1) nach einem der vorherigen Ansprüche, wobei die Funktionslage (2) und die zweite Lage (4) im Innenrandbereich der Mediendurchgangsöffnung(en) (6, 6') übereinander liegen.

4. Flachdichtung (1) nach einem der vorherigen Ansprüche, wobei die zweite Lage (4) im Bereich der Mediendurchgangsöffnung(en) (6, 6') radial nach innen über die Funktionslage (2) vorsteht.

5. Flachdichtung (1) nach einem der vorherigen Ansprüche, wobei mindestens eines der Elastomerdichtprofile (18) die Innenrandkante der zweiten Lage (4) der zugehörigen Mediendurchgangsöffnung (6') umschließt.

6. Flachdichtung (1) nach einem der vorherigen Ansprüche, wobei die Funktionslage (2) eine dickere Lage als die zweite Lage (4) ist.

7. Flachdichtung (1) nach einem der vorherigen Ansprüche, wobei die zweite Lage (4) eine Sicke (14) um mindestens eine Mediendurchgangsöffnung (6') aufweist, die in Richtung der Funktionslage (2) weist.

8. Flachdichtung (1) nach einem der vorherigen Ansprüche, wobei die Funktionslage (2) eine Dicke von 0,1-1,5 mm, bevorzugt etwa 0,9-1,1 mm und/oder die zweite Lage (4) eine Dicke von 0,1-0,4, bevorzugt etwa 0,1-0,3 mm aufweist.

9. Flachdichtung (1) nach einem der vorherigen Ansprüche, wobei die Funktionslage (2) eine verzinkte Stahllage und/oder die zweite Lage (4) eine Federstahllage ist.

10. Flachdichtung (1) nach einem der vorherigen Ansprüche, wobei die Funktionslage (2) mindestens zwei Brennraumsicken (10) pro Brennraumöffnung (8) aufweist.

11. Flachdichtung (1) nach einem der vorherigen Ansprüche, wobei mindestens eines der Elastomerdichtprofile (18) der Funktionslage (2) zuweisend oder von der Funktionslage (2) weg weisend verdickt ist.

12. Flachdichtung (1) nach einem der vorherigen Ansprüche, wobei die Funktionslage (2) mindestens eine Verbindungsdurchgangsöffnung (20) aufweist, und die zweite Lage (4) mindestens eine Umfalzung aufweist, die um den Innenrand der Verbindungsdurchgangsöffnung (20) umgefaltet ist.

13. Flachdichtung (1) nach einem der vorherigen Ansprüche, wobei die Flachdichtung (1) eine Zylinderkopfdichtung ist.

14. Flachdichtung (1) nach einem der vorherigen Ansprüche, wobei die Dicke der zweiten Lage (4) zwischen 5% und 50%, mehr bevorzugt zwischen 10 und 30%, am meisten bevorzugt etwa 20% der Dicke der Funktionslage (2) beträgt.

## Claims

1. A flat gasket (1), comprising:
- a functional layer (2) having at least one media through-opening (6) and at least one combustion chamber through-opening (8); and
- a second layer (4), which is separate from the functional layer and has a media through-opening(s) (6') that corresponds to the media through-opening(s) (6) in the functional layer (2) and a combustion chamber through-opening(s) (8') that corresponds to the combustion chamber through-opening(s) (8) in the functional layer (2);
- wherein the functional layer (2) has at least one combustion chamber sealing bead (10), which is preferably a full bead, for each combustion chamber through-opening (8); and
- wherein the second layer (4) has an elastomer sealing profile (18) for each media through-opening (6');
**characterized in that**
- the second layer (4) has an outer boundary sealing bead (12) for each media through-opening (6'); and
- the functional layer (2) and the second layer (4) lie one above the other in the outer boundary region; or
- the second layer (4) extends further outwards than the functional layer (2).

2. The flat gasket (1) according to Claim 1,
wherein the functional layer (2) and the second layer (4) lie one above the other in the inner boundary region of the combustion chamber opening(s) (8, 8').

3. The flat gasket (1) according to any one of the preceding claims,
wherein the functional layer (2) and the second layer (4) lie one above the other in the inner boundary region of the media through-opening(s) (6, 6').

4. The flat gasket (1) according to any one of the preceding claims,
wherein the second layer (4) projects radially inwards over the functional layer (2) in the region of the media through-opening(s) (6, 6').

5. The flat gasket (1) according to any one of the preceding claims,
wherein at least one of the elastomer sealing profiles (18) surrounds the inner boundary edge of the second layer (4) of the associated media through-opening (6').

6. The flat gasket (1) according to any one of the preceding claims,
wherein the functional layer (2) is a thicker layer than the second layer (4).

7. The flat gasket (1) according to any one of the preceding claims,
wherein the second layer (4) has a bead (14) around at least one media through-opening (6'), which points in the direction of the functional layer (2).

8. The flat gasket (1) according to any one of the preceding claims,
wherein the functional layer (2) has a thickness of 0.1-1.5 mm, preferably approximately 0.9-1.1 mm and/or the second layer (4) has a thickness of 0.1-0.4 mm, preferably approximately 0.1-0.3 mm.

9. The flat gasket (1) according to any one of the preceding claims,
wherein the functional layer (2) is a galvanized steel layer and/or the second layer (4) is a spring steel layer.

10. The flat gasket (1) according to any one of the preceding claims,
wherein the functional layer (2) has at least two combustion chamber beads (10) per combustion chamber opening (8).

11. The flat gasket (1) according to any one of the preceding claims,
wherein at least one of the elastomer sealing profiles (18) is thickened facing the functional layer (2) or facing away from the functional layer (2).

12. The flat gasket (1) according to any one of the preceding claims,
wherein the functional layer (2) has at least one connecting through-opening (20) and the second layer (4) has at least one folded-over portion, which is folded over around the inner boundary of the connecting through-opening (20).

13. The flat gasket (1) according to any one of the preceding claims,
wherein the flat gasket (1) is a cylinder head gasket.

14. The flat gasket (1) according to any one of the preceding claims,
wherein the thickness of the second layer (4) is between 5% and 50%, more preferably between 10 and 30%, most preferably approximately 20% of the thickness of the functional layer (2).

## Revendications

1. Joint d'étanchéité plat (1), comprenant :
- une couche fonctionnelle (2) avec au moins une ouverture de passage de fluide (6) et au moins une ouverture de passage de chambre de combustion (8) ; et
- une deuxième couche (4) séparée de la couche fonctionnelle avec une ouverture de passage de fluide (6') correspondant à l'ouverture/aux ouvertures de passage de fluide (6') de la couche fonctionnelle (2) et une ouverture de passage de chambre de combustion (8') correspondant à l'ouverture/aux ouvertures de passage de chambre de combustion (8) de la couche fonctionnelle (2) ;
- la couche fonctionnelle (2) comportant au moins une moulure d'étanchéité de chambre de combustion (10) pour chaque ouverture de passage de chambre de combustion (8), qui est de préférence une moulure pleine ; et
- la deuxième couche (4) comportant un profilé d'étanchéité en élastomère (18) pour chaque ouverture de passage de fluide (6') ;
**caractérisé en ce que**
- la deuxième couche (4) comporte une moulure d'étanchéité de bord extérieur (12) pour chaque ouverture de passage de fluide (6') ; et
- la couche fonctionnelle (2) et la deuxième couche (4) sont superposées ; ou
- la deuxième couche (4) s'étend vers l'extérieur plus que la couche fonctionnelle (2).

2. Joint d'étanchéité plat (1) selon la revendication 1, la couche fonctionnelle (2) et la deuxième couche (4) étant superposées dans la zone de bord intérieure de l'ouverture/des ouvertures de chambre de combustion (8, 8').

3. Joint d'étanchéité plat (1) selon l'une quelconque des revendications précédentes, la couche fonctionnelle (2) et la deuxième couche (4) étant superposées dans la zone de bord intérieure de l'ouverture/des ouvertures de passage de fluide (6, 6').

4. Joint d'étanchéité plat (1) selon l'une quelconque des revendications précédentes, la deuxième couche (4) dépassant radialement vers l'intérieur au-dessus de la couche fonctionnelle (2) dans la zone de l'ouverture/des ouvertures de passage de fluide (6, 6').

5. Joint d'étanchéité plat (1) selon l'une quelconque des revendications précédentes, au moins un des profilés d'étanchéité en élastomère (18) entourant la bordure intérieure de la deuxième couche (4) de l'ouverture de passage de fluide (6') correspondante.

6. Joint d'étanchéité plat (1) selon l'une quelconque des revendications précédentes, la couche fonctionnelle (2) étant une couche plus épaisse que la deuxième couche (4).

7. Joint d'étanchéité plat (1) selon l'une quelconque des revendications précédentes, la deuxième couche (4) comportant une moulure (14) autour d'au moins une ouverture de passage de fluide (6'), qui est tournée en direction de la couche fonctionnelle (2).

8. Joint d'étanchéité plat (1) selon l'une quelconque des revendications précédentes, la couche fonctionnelle (2) comportant une épaisseur de 0,1-1,5 mm, de préférence environ 0,9-1,1 mm et/ou la deuxième couche (4) comportant une épaisseur de 0,1-0,4, de préférence environ 0,1-0,3 mm.

9. Joint d'étanchéité plat (1) selon l'une quelconque des revendications précédentes, la couche fonctionnelle (2) étant une couche d'acier galvanisée et/ou la deuxième couche (4) une couche d'acier à ressort.

10. Joint d'étanchéité plat (1) selon l'une quelconque des revendications précédentes, la couche fonctionnelle (2) comportant au moins deux moulures de chambre de combustion (10) par ouverture de chambre de combustion (8).

11. Joint d'étanchéité plat (1) selon l'une quelconque des revendications précédentes, au moins un des profilés d'étanchéité en élastomère (18) de la couche fonctionnelle (2) étant épaissi vers ou en s'éloignant de la couche fonctionnelle (2).

12. Joint d'étanchéité plat (1) selon l'une quelconque des revendications précédentes, la couche fonctionnelle (2) comportant au moins une ouverture de passage de liaison (20) et la deuxième couche (4) comportant au moins un pliage, qui est replié autour du bord intérieur de l'ouverture de passage de liaison (20).

13. Joint d'étanchéité plat (1) selon l'une quelconque des revendications précédentes, le joint d'étanchéité plat (1) étant un joint de culasse.

14. Joint d'étanchéité plat (1) selon l'une quelconque des revendications précédentes, l'épaisseur de la deuxième couche (4) représentant entre 5% et 50%, de préférence entre 10 et 30%, de façon la plus préférée environ 20% de l'épaisseur de la couche fonctionnelle (2).
